# EUROPEAN PATENT APPLICATION

(11) **EP 4 681 965 A1**
(43) Date of publication of application: **21.01.2026**
(21) Application number: 25181052.9
(22) Date of filing: 05.06.2025
(51) Int. Cl.: B60K 35/81

(54) **DISPLAY CONTROL DEVICE, DISPLAY CONTROL METHOD, AND RECORDING MEDIUM IN WHICH DISPLAY CONTROL PROGRAM IS RECORDED**

(30) Priority: 18.07.2024 JP 2024115120
(71) Applicant: TOYOTA JIDOSHA KABUSHIKI KAISHA, Toyota-shi, Aichi-ken 471-8571 (JP)
(72) Inventor: TSUJINO, Miki, Toyota-shi, 471-8571 (JP)
(74) Representative: J A Kemp LLP

(57) **Abstract**

A display control device including a processor, the processor causing a display unit to display, based on detection information detectable by a vehicle, a vehicle image representing the vehicle (10A) as viewed from a virtual viewpoint and causing the display unit to display a specific object image, representing a specific object (78) that is present in a vicinity of the vehicle, in a predetermined color simulating a characteristic color derived from an outward appearance of the specific object.

## Description

### BACKGROUND

### Technical Field

The present disclosure relates to a display control device, a display control method, and a recording medium in which a display control program is recorded.

### Related Art

Japanese Patent No. 7,048,398 discloses a vehicle control device that can perform autonomous driving that gives an occupant a sense of security.

In this connection, in the technology pertaining to Japanese Patent No. 7,048,398, an image representing another vehicle that is present in the vicinity of the host vehicle is displayed on a display unit (see FIG. 8 of Japanese Patent No. 7,048,398).

Here, when displaying on the display unit images representing objects that are present in the vicinity of the host vehicle, such as the image representing the other vehicle, it has conventionally been difficult to make the occupant of the host vehicle apprehend which objects the images representing the objects correspond to.

### SUMMARY

Thus, it is an object of the present disclosure to provide a display control device, a display control method, and a recording medium in which a display control program is recorded with which an occupant of a vehicle can easily be made to apprehend a specific object corresponding to a specific object image compared with a case where a characteristic derived from the outward appearance of the specific object is not reflected in the specific object image representing the specific object.

A display control device pertaining to a first aspect includes a control unit that causes a display unit to display, based on detection information detectable by a vehicle, a vehicle image representing the vehicle as viewed from a virtual viewpoint and causes the display unit to display a specific object image, representing a specific object that is present in a vicinity of the vehicle, in a predetermined color simulating a characteristic color derived from an outward appearance of the specific object.

In the display control device pertaining to the first aspect, the control unit causes the display unit to display, based on the detection information, the vehicle image representing the vehicle as viewed from the virtual viewpoint. Additionally, the control unit causes the display unit to display the specific object image, representing the specific object that is present in a vicinity of the vehicle, in the predetermined color simulating the characteristic color derived from an outward appearance of the specific object. Because of this, in the display control device, a characteristic derived from the outward appearance of the specific object is reflected in the color of the specific object image. Consequently, in the display control device, the occupant of the vehicle can easily be made to apprehend the specific object corresponding to the specific object image compared with a case where a characteristic derived from the outward appearance of the specific object is not reflected in the specific object image.

A display control device pertaining to a second aspect is the display control device of the first aspect, wherein the control unit causes the display unit to display one part of the specific object image in the predetermined color and display parts other than the one part in a predetermined mode.

In the display control device pertaining to the second aspect, the control unit causes the display unit to display the one part of the specific object image in the predetermined color and display parts other than the one part in the predetermined mode. Because of this, in the display control device, the processing burden on the control unit can be reduced compared with a case where the entire specific object image is displayed in the predetermined color.

A display control device pertaining to a third aspect is the display control device of the first or second aspect, wherein the control unit chooses, for the predetermined color from among plural colors prepared beforehand, a color whose color difference from the characteristic color is smallest.

In the display control device pertaining to the third aspect, the control unit chooses, for the predetermined color from among plural colors prepared beforehand, a color whose color difference from the characteristic color is smallest. Because of this, in the display control device, the processing burden on the control unit can be reduced compared with a case where a predetermined color simulating the characteristic color is generated every time the specific object image is displayed.

A display control device pertaining to a fourth aspect is the display control device of any one of the first to third aspects, wherein the specific object is an object having a predetermined attribute.

In the display control device pertaining to the fourth aspect, the specific object is an object having a predetermined attribute. Because of this, in the display control device, the occupant of the vehicle can be encouraged to be aware of objects having the predetermined attribute that are present in the vicinity of the vehicle.

A display control device pertaining to a fifth aspect is the display control device of the fourth aspect, wherein the control unit causes the display unit to display the specific object image in a mode according to the attribute that the specific object has.

In the display control device pertaining to the fifth aspect, the control unit causes the display unit to display the specific object image in a mode according to the attribute that the specific object has. Because of this, in the display control device, the awareness of the occupant of the vehicle with respect to the specific object can be raised.

A display control device pertaining to a sixth aspect is the display control device of any one of the first to fifth aspects, wherein when the control unit causes the display unit to display, based on the detection information and together with the specific object image, another object image representing another object different from the specific object, the control unit causes the display unit to display the other object image in a predetermined mode.

In the display control device pertaining to the sixth aspect, when the control unit causes the display unit to display, based on the detection information, the other object image together with the specific object image, the control unit causes the display unit to display the other object image in the predetermined mode. Because of this, in the display control device, the attention level of the occupant of the vehicle with respect to the specific object can be raised at the same time that the processing burden on the control unit is reduced compared with a case where a characteristic derived from the outward appearance of the other object is reflected in the other object image.

A display control device pertaining to a seventh aspect is the display control device of any one of the first to sixth aspects, wherein the display unit is a meter display provided on a vehicle front side of a driver's seat of the vehicle.

In the display control device pertaining to the seventh aspect, the display unit is a meter display provided on a vehicle front side of the driver's seat of the vehicle. Because of this, in the display control device, the occupant, who is unable to look at multiple places while driving the vehicle, can be efficiently made to apprehend information representing the meters of the vehicle, the vehicle image, and the specific object image.

A display control device pertaining to an eighth aspect is the display control device of any one of the first to seventh aspects, wherein the control unit causes the display unit to display, in the predetermined color, a specific object image representing an object whose cautionary level is highest among specific objects.

In the display control device pertaining to the eighth aspect, the control unit causes the display unit to display, in the predetermined color, the specific object image representing the object whose cautionary level is highest among specific objects. Because of this, in the display control device, the occupant of the vehicle can be encouraged to be aware of objects whose cautionary level is highest among specific objects that are present in the vicinity of the vehicle.

A display control method pertaining to a ninth aspect is a display control method whereby a computer executes a process to cause a display unit to display, based on detection information detectable by a vehicle, a vehicle image representing the vehicle as viewed from a virtual viewpoint and cause the display unit to display a specific object image, representing a specific object that is present in a vicinity of the vehicle, in a predetermined color simulating a characteristic color derived from an outward appearance of the specific object.

In the display control method pertaining to the ninth aspect, the vehicle image representing the vehicle as viewed from the virtual viewpoint is displayed on the display unit based on the detection information. Additionally, in the display control method, the specific object image representing the specific object that is present in a vicinity of the vehicle is displayed on the display unit in the predetermined color simulating the characteristic color derived from an outward appearance of the specific object. Because of this, in the display control method, a characteristic derived from the outward appearance of the specific object is reflected in the color of the specific object image. Consequently, in the display control method, the occupant of the vehicle can easily be made to apprehend the specific object corresponding to the specific object image compared with a case where a characteristic derived from the outward appearance of the specific object is not reflected in the specific object image.

A tenth aspect is a non-transitory recording medium in which a display control program is recorded. The display control program causes a computer to execute a process to cause a display unit to display, based on detection information detectable by a vehicle, a vehicle image representing the vehicle as viewed from a virtual viewpoint and cause the display unit to display a specific object image, representing a specific object that is present in a vicinity of the vehicle, in a predetermined color simulating a characteristic color derived from an outward appearance of the specific object.

In the display control program pertaining to the tenth aspect, the vehicle image representing the vehicle as viewed from the virtual viewpoint is displayed on the display unit based on the detection information. Additionally, in the display control program, the specific object image representing the specific object that is present in a vicinity of the vehicle is displayed on the display unit in the predetermined color simulating the characteristic color derived from an outward appearance of the specific object. Because of this, in the display control program, a characteristic derived from the outward appearance of the specific object is reflected in the color of the specific object image. Consequently, in the display control program, the occupant of the vehicle can easily be made to apprehend the specific object corresponding to the specific object image compared with a case where a characteristic derived from the outward appearance of the specific object is not reflected in the specific object image.

As described above, in the display control device, the display control method, and the recording medium in which is recorded the display control program pertaining to the present disclosure, the occupant of the vehicle can easily be made to apprehend the specific object corresponding to the specific object image compared with a case where a characteristic derived from the outward appearance of the specific object is not reflected in the specific object image representing the specific image.

### BRIEF DESCRIPTION OF THE DRAWINGS

Exemplary embodiments of the present disclosure will be described in detail based on the following figures, wherein:
FIG. 1 is a block diagram showing schematic configurations of a vehicle;
FIG. 2 is a schematic drawing showing the front portion of the interior of a cabin in the vehicle as viewed from the vehicle rear side;
FIG. 3 is an explanatory diagram describing a display region of a first display unit;
FIG. 4 is a block diagram showing schematic configurations of a display control device;
FIG. 5 is a block diagram showing an example of functional configurations of the display control device;
FIG. 6 is a flowchart showing the flow of an identification process;
FIG. 7 is a first explanatory diagram showing an example display that is displayed in the display region of the first display unit;
FIG. 8 is an explanatory diagram showing the outward appearance of a specific object;
FIG. 9 is an explanatory diagram showing the outward appearance of another object;
FIG. 10 is a second explanatory diagram showing an example display that is displayed in the display region of the first display unit;
FIG. 11 is a third explanatory diagram showing an example display that is displayed in the display region of the first display unit;
FIG. 12 is a fourth explanatory diagram showing an example display that is displayed in the display region of the first display unit; and
FIG. 13 is a fifth explanatory diagram showing an example display that is displayed in the display region of the first display unit.

### DETAILED DESCRIPTION

A vehicle 10 pertaining to the embodiments will be described below.

### (First Embodiment)

First, a first embodiment of the vehicle 10 pertaining to the embodiments will be described.

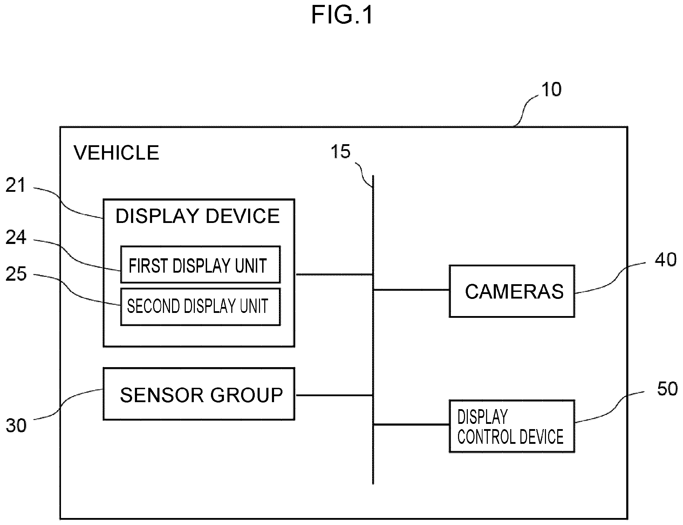

FIG. 1 is a block diagram showing schematic configurations of the vehicle 10.

As shown in FIG. 1, the vehicle 10 includes a display device 21, a sensor group 30, cameras 40, and a display control device 50. The display device 21, the sensor group 30, the cameras 40, and the display control device 50 are connected to each other via an external bus (communication bus) 15.

The display device 21 displays suggestions for operations pertaining to functions of the vehicle 10 and images pertaining to explanations of those functions. In the present embodiment, a first display unit 24 and a second display unit 25 are provided as the display device 21. The first display unit 24 is an example of the "display unit" of the present disclosure. It will be noted that the first display unit 24 and the second display unit 25 will be described in detail further below.

The sensor group 30 includes sensors for detecting the state of and the area surrounding the vehicle 10, such as a 3D LiDAR sensor, a millimeter wave sensor, an infrared sensor, a turn signal sensor, an accelerator pedal position sensor, a shift position sensor, an ambient light sensor, a vehicle speed sensor, a steering angle sensor, an angular velocity sensor, a global positioning system (GPS) sensor, a gyro sensor, and an acceleration sensor. The sensor group 30 outputs detection results of each sensor to the display control device 50.

The cameras 40 are imaging devices that capture images using imaging elements such as charge-coupled device (CCD) image sensors or complementary metal oxide semiconductor (CMOS) image sensors. The cameras 40 are provided on front, rear, left, and right sides of the vehicle 10 and capture images of what is in the vicinity of the vehicle 10. For example, the images captured by the cameras 40 provided on the front side of the vehicle 10 are used to perceive another vehicle driving in front of the vehicle 10, the intervehicle distance to the other vehicle, lanes, and traffic lights. Additionally, the images captured by the cameras 40 are output to the display control device 50. It will be noted that the cameras 40 may also be configured as imaging devices for other purposes, such as a drive recorder and an advanced driver assistance system (ADAS).

The display control device 50 is, for example, an electronic control unit (ECU) that performs various types of control.

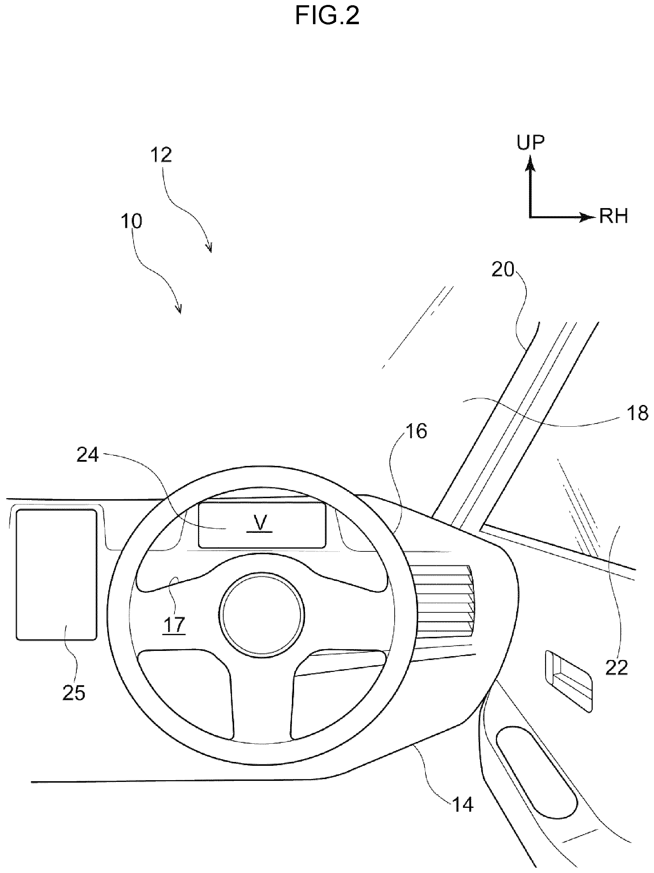

FIG. 2 is a schematic drawing showing the front portion of the interior of a cabin 12 in the vehicle 10. Arrow UP in FIG. 2 indicates an upward direction in the vehicle up and down direction, and arrow RH indicates a rightward direction in the vehicle width direction. Up and down and left and right in the following description mean up and down in the vehicle up and down direction and left and right in the vehicle width direction, respectively.

As shown in FIG. 2, an instrument panel 14 is provided in the front portion of the interior of the cabin 12 in the vehicle 10. The instrument panel 14 extends in the vehicle width direction, and a steering wheel 16 is provided on the vehicle right side of the instrument panel 14. That is, the vehicle 10 is, as an example, a right-hand drive vehicle where the steering wheel 16 is provided on the right side, and the driver's seat is provided on the vehicle right side. It will be noted that the vehicle 10 is not limited to this and may also be a left-hand drive vehicle where the driver's seat is provided on the vehicle left side.

A windshield glass 18 is provided on the front end portion of the instrument panel 14. The windshield glass 18 extends in the vehicle up and down direction and the vehicle width direction and separates the inside of the cabin 12 from the outside of the cabin 12.

The vehicle right-side end portion of the windshield glass 18 is secured to a front pillar 20 on the vehicle right side. The front pillar 20 extends in the vehicle up and down direction, and the windshield glass 18 is secured to the vehicle width direction inner end portion of the front pillar 20. Furthermore, the front end portion of a front side glass 22 is secured to the vehicle width direction outer end portion of the front pillar 20. It will be noted that the vehicle left-side end portion of the windshield glass 18 is secured to a front pillar (not shown in the drawings) located on the vehicle left side.

Here, the instrument panel 14 is provided with the first display unit 24, which includes an image display region V. The first display unit 24 is configured by a meter display provided on the vehicle front side of the driver's seat on the vehicle right side of the instrument panel 14. The first display unit 24 is connected to various types of meter instruments installed in the vehicle 10 and is provided in a position in which it comes into view when the driver is looking in the vehicle forward direction.

The instrument panel 14 is also provided with the second display unit 25. The second display unit 25 is configured by a center display provided in the vehicle width direction central portion of the instrument panel 14.

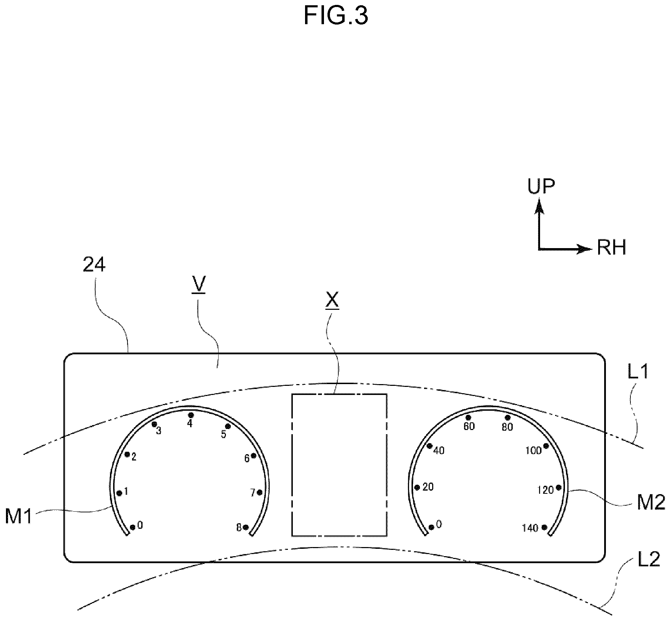

FIG. 3 is an explanatory diagram describing the display region of the meter display as the display region V of the first display unit 24.

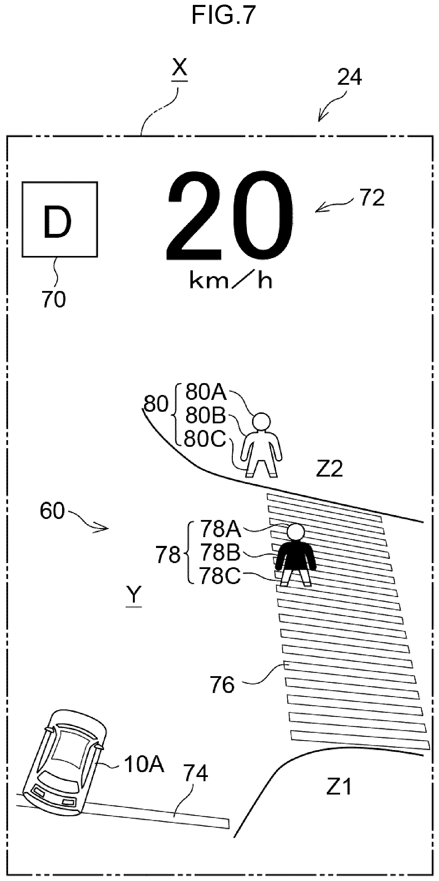

FIG. 3 shows the display region V of the first display unit 24. Additionally, in the present embodiment, in a display region X that is a partial region of the display region V, a vehicle image 10A (e.g., see FIG. 7) that is an image representing the vehicle 10 and a surrounding area image that is an image representing the area surrounding the vehicle 10 are displayed. It will be noted that specific examples of these images will be described further below.

The display region X is a region that is visible through an opening 17 in the steering wheel 16 (see FIG. 2) to the driver sitting in the driver's seat. Specifically, as shown in FIG. 3, the center of the region that can be seen between an upper edge line L1 and a lower edge line L2 of the opening 17 is the display region X. Meter displays M1, M2 representing meters of the vehicle 10 are displayed to the left and right of the display region X in the display region V.

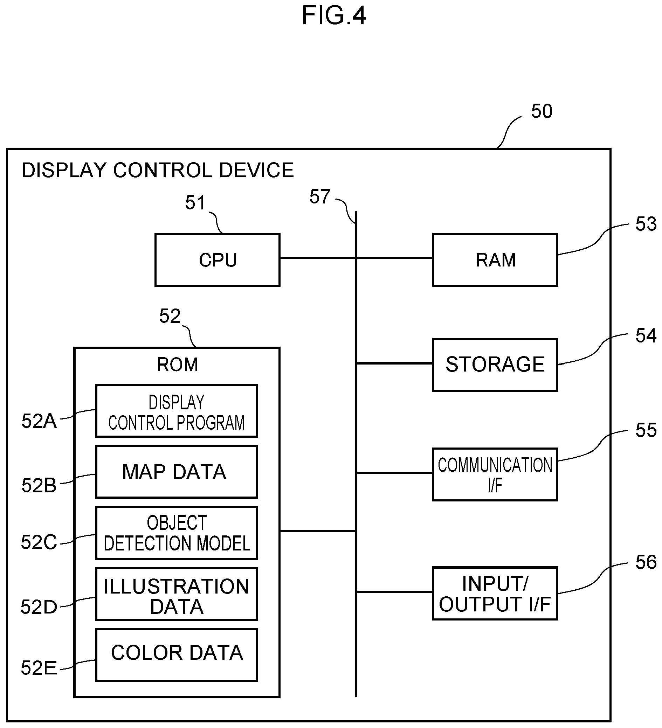

FIG. 4 is a block diagram showing schematic configurations of the display control device 50. The display control device 50 is an example of the "computer" of the present disclosure.

As shown in FIG. 4, the display control device 50 is configured to include a central processing unit (CPU) 51, a read-only memory (ROM) 52, a random-access memory (RAM) 53, a storage 54, a communication interface (I/F) 55, and an input interface (I/F) 56. The CPU 51, the ROM 52, the RAM 53, the storage 54, the communication interface 55, and the input/output interface 56 are communicably connected to each other via an internal bus 57.

The CPU 51 is a central arithmetic processing unit, executes various types of programs, and controls each part of the display control device 50. That is, the CPU 51 reads programs from the ROM 52 and executes the programs using the RAM 53 as a workspace.

The ROM 52 stores various types of programs and various types of data. The RAM 53 temporarily stores programs or data as a workspace.

The storage 54 is a NAND memory configured by an embedded multimedia card (eMMC) or universal flash storage (UFS). The storage 54 and the CPU 51 are interconnected by an eMMC or UFS interface.

Furthermore, it is desired that the parts with which the display control device 50 is equipped, such as the ROM 52 and the storage 54, be tamper-resistant media such as hardware security modules (HSM).

The communication interface 55 is an interface for connecting to other ECUs. The interface uses an Ethernet (registered trademark) communication protocol.

The input/output interface 56 is an interface for communicating with in-vehicle devices installed in the vehicle 10, such as the display device 21, the sensor group 30, and the cameras 40.

Here, the ROM 52 stores a display control program 52A, map data 52B, an object detection model 52C, illustration data 52D, and color data 52E.

The display control program 52A is a program for causing the CPU 51 to execute various types of processes. When executing the display control program 52A, the display control device 50 uses the configurations shown in FIG. 4 to execute processes based on the display control program 52A. The display control program 52A is an example of the "display control program" of the present disclosure.

The map data 52B are high-definition map data representing a nationwide map on which the vehicle 10 is positioned.

The object detection model 52C is a model which, when the images captured by the cameras 40 are input thereto, recognizes regions of objects represented in the captured images and determines classes of the objects. The object detection model 52C is configured appropriately using a known model such as, for example, You Only Look Once (YOLO) and Single Shot MultiBox Detector (SSD).

The objects include, for example, persons, animals, and vehicles. Furthermore, the classes include, for example, children, adults, and seniors with respect to persons, dogs, cats, and horses with respect to animals, and two-wheeled vehicles, three-wheeled vehicles, and four-wheeled vehicles with respect to vehicles.

The illustration data 52D are data representing illustration designs for the objects that are displayed on the first display unit 24.

The color data 52E are data representing colors with which images representing specific objects described later can be colored. For example, the color data 52E are RGB values corresponding to plural colors prepared beforehand. Because of this, in the color data 52E are stored RGB values corresponding to red, RGB values corresponding to blue, RGB values corresponding to white, and RGB values corresponding to black.

Next, functional configurations of the display control device 50 will be described.

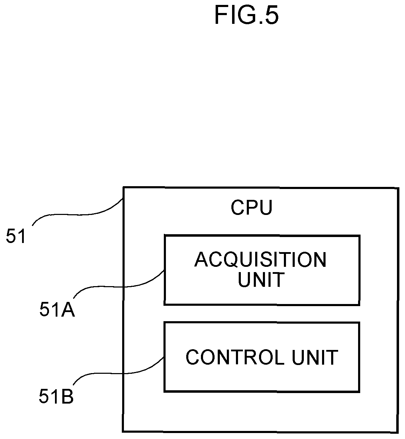

FIG. 5 is a block diagram showing an example of the functional configurations of the display control device 50.

As shown in FIG. 5, the CPU 51 of the display control device 50 has an acquisition unit 51A and a control unit 51B as functional configurations. Each of these functional configurations is realized by the CPU 51 reading and executing the display control program 52A stored in the ROM 52. The CPU 51 is an example of the "processor" of the present disclosure. The control unit 51B is an example of the "control unit" of the present disclosure.

The acquisition unit 51A acquires various types of information. For example, the acquisition unit 51A acquires detection information detectable by the vehicle 10 as the various types of information. The detection information includes detection results obtained by the sensors configuring the sensor group 30 and the images captured by the cameras 40.

The control unit 51B performs display control relating to what is displayed on the display device 21. For example, as the display control, the control unit 51B causes the first display unit 24 to display, based on the detection information acquired by the acquisition unit 51A, the vehicle image 10A and the surrounding area image as viewed from a virtual viewpoint. The virtual viewpoint is set in a three-dimensional virtual space whose origin is the position of the vehicle image 10A and is defined by viewpoint coordinates and a viewpoint angle (orientation) in the virtual space. As an example, the virtual viewpoint is a viewpoint viewed at a specific viewpoint angle from specific viewpoint coordinates above the vehicle image 10A in the virtual space. Furthermore, the surrounding area image includes a road image, representing a road including sidewalks and a roadway on which the vehicle 10 is driving, and object images, representing objects other than the vehicle 10 such as other vehicles and pedestrians.

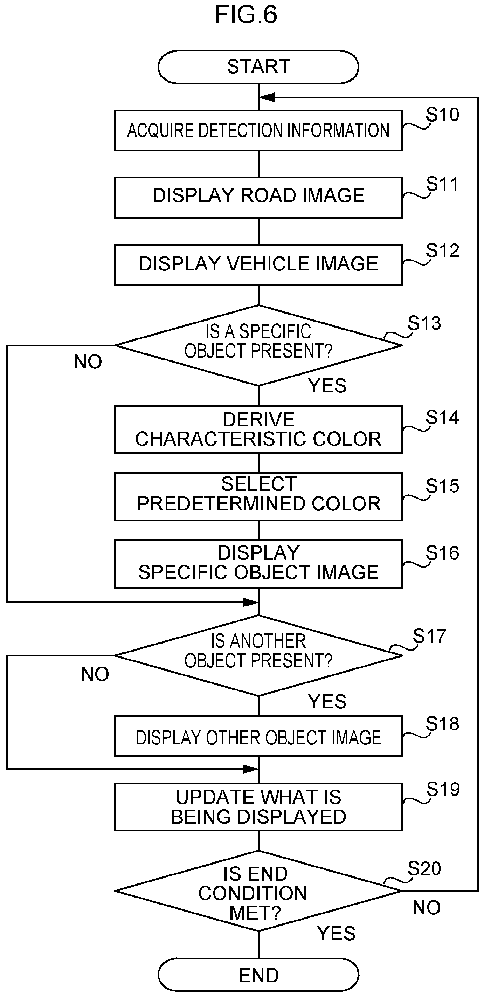

FIG. 6 is a flowchart showing the flow of an identification process executed by the display control device 50. The identification process is performed by the CPU 51 reading from the ROM 52, loading to the RAM 53, and executing the display control program 52A. As an example, the identification process is repeatedly automatically performed every time a certain amount of time elapses.

In step S10 shown in FIG. 6, the CPU 51 acquires the detection information detectable by the vehicle 10. Then, the CPU 51 proceeds to step S11.

In step S11, the CPU 51 causes the first display unit 24 to display the road image based on the detection information acquired in step S10. For example, the CPU 51 identifies the current location of the vehicle 10 from the detection result of the GPS sensor, which is included in the detection information. Thereafter, the CPU 51 three-dimensionally models, and draws on the first display unit 24, a road in the vicinity of the vehicle 10 corresponding to the current location represented by the map data 52B. Then, the CPU 51 proceeds to step S12.

In step S12, the CPU 51 causes the first display unit 24 to display the vehicle image 10A based on the detection information acquired in step S10. The CPU 51 acquires an illustration design for the vehicle 10 from the illustration data 52D and draws on the first display unit 24 the vehicle image 10A generated based on the illustration design. At this time, the CPU 51 causes the vehicle image 10A to be displayed on the road image from the perspective of the virtual viewpoint and in a position according to the current location of the vehicle 10 identified from the detection information. Then, the CPU 51 proceeds to step S13.

In step S13, the CPU 51 determines whether a specific object is present in the vicinity of the vehicle 10 based on the detection information acquired in step S10. Here, the CPU 51 proceeds to step S14 when it determines that a specific object is present (step S13: YES). On the other hand, the CPU 51 proceeds to step S17 when it determines that a specific object is not present (step S13: NO).

Here, the specific object is an object having a predetermined attribute. Which objects out of the various types of objects that are present in real space correspond to the specific objects is decided beforehand. In the present embodiment, persons classified into the class of children or seniors as the attribute are set as the specific objects. It will be noted that the attribute that can correspond to the specific objects is not limited to what is described above and may also be persons classified into the class of pedestrians (i.e., pedestrians in general) or vehicles classified into the class of two-wheeled vehicles or compact vehicles. The attribute indicates that caution is needed, that is, that the cautionary level is high. "Cautionary level is high" means that the potential for an incident such as the driver of the vehicle 10 having a near miss or an accident such as contact between the vehicle 10 and an object to occur is high.

The CPU 51 inputs to the object detection model 52C the images captured by the cameras 40, which are included in the detection information acquired in step S10, and determines whether a specific object is present based on the output results of the object detection model 52C. Specifically, the CPU 51 determines that a specific object is present when the output results of the object detection model 52C include a person classified into the class of children or seniors. On the other hand, the CPU 51 determines that a specific object is not present when the output results of the object detection model 52C do not include a person classified into the class of children and seniors.

In step S14, the CPU 51 derives a characteristic color from the outward appearance of the specific object. For example, the characteristic color is a representative color indicating a color that is representative in the images. The CPU 51 derives the representative color by finding the mean, the mode, or the median of the RGB values of each pixel within the region of the specific object in the images captured by the cameras 40, which are included in the detection information acquired in step S10. Then, the CPU 51 proceeds to step S15.

In step S15, the CPU 51 chooses a predetermined color simulating the characteristic color derived in step S14. For example, the CPU 51 chooses, for the predetermined color from among the plural colors represented by the color data 52E, a color whose color difference from the characteristic color is smallest. Then, the CPU 51 proceeds to step S16.

In step S16, the CPU 51 colors with the predetermined color chosen in step S15, and causes the first display unit 24 to display, a specific object image that is an image representing the specific object. The CPU 51 acquires an illustration design for the specific object from the illustration data 52D and draws on the first display unit 24 a specific object image generated by coloring the illustration design with the predetermined color. At this time, the CPU 51 causes the specific object image to be displayed on the road image from the perspective of the virtual viewpoint and in a position according to the current location of the specific object identified from the detection information. Then, the CPU 51 proceeds to step S17.

In step S17, the CPU 51 determines whether another object different from the specific object is present in the vicinity of the vehicle 10 based on the detection information acquired in step S10. Here, the CPU 51 proceeds to step S18 when it determines that another object is present (step S17: YES). On the other hand, the CPU 51 proceeds to step S19 when it determines that another object is not present (step S17: NO).

The CPU 51 inputs to the object detection model 52C the images captured by the cameras 40, which are included in the detection information acquired in step S10, and determines whether another object is present based on the output results of the object detection model 52C. Specifically, the CPU 51 determines that another object is present when the output results of the object detection model 52C include a person classified into a class other than children and seniors or an object classified into another class other than persons. On the other hand, the CPU 51 determines that another object is not present when the output results of the object detection model 52C include only persons classified into the class of children or seniors or when the output results of the object detection model 52C do not include an object classified into any class.

In step S18, the CPU 51 causes the first display unit 24 to display, in a predetermined mode, another object image that is an image representing the other object. The predetermined mode is, for example, a default color scheme. The CPU 51 acquires an illustration design for the other object from the illustration data 52D and draws on the first display unit 24 another object image generated based on the illustration design. At this time, the CPU 51 displays the other object image on the road image from the perspective of the virtual viewpoint and in a position according to the current location of the other object identified from the detection information. Then, the CPU 51 proceeds to step S19.

In step S19, the CPU 51 updates what is displayed on the first display unit 24 based on the detection information acquired in step S10. For example, if the vehicle speed of the vehicle 10 increases or decreases, the CPU 51 changes the numerical value indicated by later-described vehicle speed information 72 (see FIG. 7 and other drawings) displayed on the first display unit 24, and if the vehicle 10 comes near a pedestrian, the CPU 51 reduces the distance between the vehicle image 10A and an image representing the pedestrian on the first display unit 24. Then, the CPU 51 proceeds to step S20.

In step S20, the CPU 51 determines whether a predetermined end condition is met. Here, the CPU 51 ends the identification process when it determines that the end condition is met (step S20: YES). On the other hand, the CPU 51 returns to step S10 when it determines that the end condition is not met (step S20: NO). As an example, the CPU 51 determines that the end condition is met when the ignition switch of the vehicle 10 is switched off.

Next, example displays of the first display unit 24 based on the above identification process will be described using FIG. 7 to FIG. 9.

FIG. 7 is a first explanatory diagram showing an example display that is displayed in the display region X of the first display unit 24. As an example, FIG. 7 shows what is displayed in the display region X when the vehicle 10 is driving on an ordinary road.

In the upper portion of the display region X shown in FIG. 7, shift position information 70 and vehicle speed information 72 are displayed.

The shift position information 70 represents the shift position of the vehicle 10. In FIG. 7, "D" is displayed as the shift position information 70, indicating that the shift position is the D range.

The vehicle speed information 72 represents the vehicle speed of the vehicle 10. In FIG. 7, "20 km/h" is displayed as the vehicle speed information 72, indicating that the vehicle speed is 20 km/h.

Furthermore, in the display region X shown in FIG. 7, an ordinary road image 60 serving as a road image is displayed under the shift position information 70 and the vehicle speed information 72. The ordinary road image 60 is an illustration image drawn by three-dimensionally modeling the ordinary road in the vicinity of the vehicle 10 represented by the map data 52B. Furthermore, the ordinary road image 60 is divided into a roadway Y, which is a region representing a roadway, and a sidewalk Z1 and a sidewalk Z2, which are regions representing sidewalks. A stop line image 74 representing a stop line is displayed on a part of the roadway Y where it overlaps the vehicle image 10A, and a crosswalk image 76 representing a crosswalk pertaining to crossing between the sidewalk Z1 and the sidewalk Z2 is also displayed on the roadway Y.

Additionally, in FIG. 7, the vehicle image 10A, a pedestrian image 78 serving as a specific object image, and a pedestrian image 80 serving as another object image are displayed on the ordinary road image 60.

The vehicle image 10A is an illustration image generated based on the illustration design for the vehicle 10 represented by the illustration data 52D. As an example, the vehicle 10 is passing through the stop line represented by the stop line image 74 and is about to make a right turn at an intersection. For that reason, in FIG. 7, the vehicle image 10A is displayed from the perspective of the virtual viewpoint on a part of the roadway Y where it overlaps the stop line image 74.

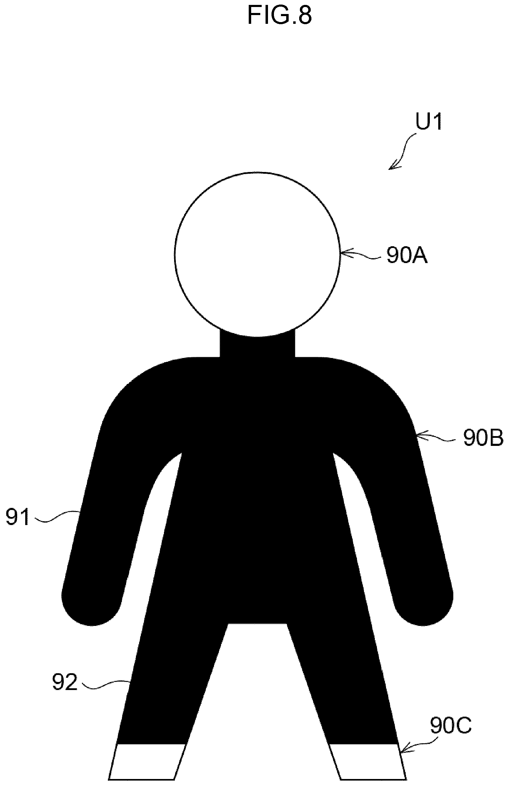

The pedestrian image 78 is a specific object image representing a user U1 (see FIG. 8) who is crossing the crosswalk represented by the crosswalk image 76. In this way, since the user U1 is in the middle of crossing the crosswalk, in FIG. 7 the pedestrian image 78 is displayed from the perspective of the virtual viewpoint on a part of the roadway Y where it overlaps the crosswalk image 76.

Furthermore, the pedestrian image 78 is an illustration image in which one part of the illustration design for a person represented by the illustration data 52D is colored with the predetermined color (e.g., black). Here, the pedestrian image 78 can be divided into a head 78A, an upper body 78B, and a lower body 78C. The head 78A is the part corresponding to the head of the person represented by the pedestrian image 78. The upper body 78B is the part of the person from the neck to the hip joints. The lower body 78C is the part of the person below the hip joints. In FIG. 7, the upper body 78B of the pedestrian image 78 is colored with the predetermined color (e.g., black), and the head 78A and the lower body 78C are displayed in a predetermined mode (e.g., white).

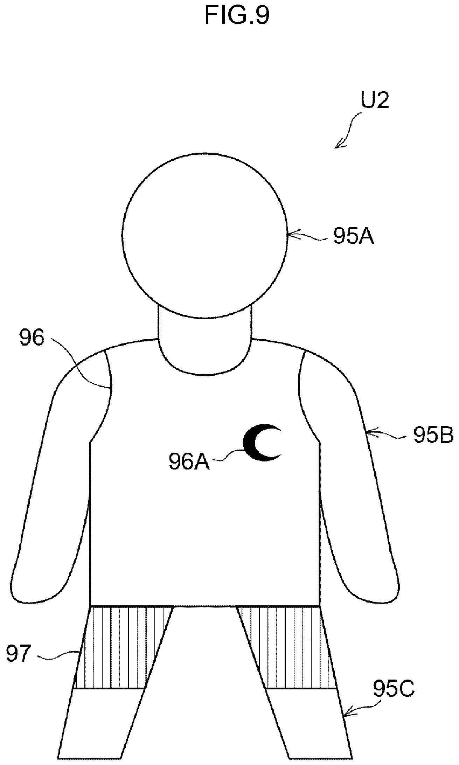

The pedestrian image 80 is another object image representing a user U2 (see FIG. 9) who is present on the sidewalk Z2. In this way, since the user U2 is present on the sidewalk represented by the sidewalk Z2, in FIG. 7 the pedestrian image 80 is displayed from the perspective of the virtual viewpoint on part of the sidewalk Z2.

Furthermore, the pedestrian image 80 is an illustration image in which the illustration design for a person represented by the illustration data 52D is generated in the predetermined mode, specifically, the default color scheme. Here, the pedestrian image 80 can be divided into a head 80A, an upper body 80B, and a lower body 80C. The head 80A is the part corresponding to the head of the person represented by the pedestrian image 80. The upper body 80B is the part of the person from the neck to the hip joints. The lower body 80C is the part of the person below the hip joints. In FIG. 7, the head 80A, the upper body 80B, and the lower body 80C of the pedestrian image 80 are displayed in the predetermined mode (e.g., white).

FIG. 8 is an explanatory diagram showing the outward appearance of the user U1 serving as the specific object.

As an example, the user U1 is an 8-year-old child. Additionally, the user U1 has been classified into the class of children and deemed to be a specific object that is present in the vicinity of the vehicle 10 in the above identification process.

Here, the user U1 has a head 90A, an upper body 90B, and a lower body 90C. The head 90A is the part corresponding to the head of the user U1. The upper body 90B is the part of the user U1 from the neck to the hip joints. The lower body 90C is the part of the user U1 below the hip joints. The user U1 is wearing a black long-sleeved turtleneck 91 on the upper body 90B and black full-length pants 92 on the lower body 90C.

When the user U1 has the outward appearance shown in FIG. 8, the characteristic color derived from the outward appearance in the above identification process becomes, for example, a black with RGB values (0:0:0). Furthermore, let us assume that the RGB values corresponding to black stored in the color data 52E are (0:0:0). In this case, the CPU 51 chooses, for the predetermined color from among the plural colors represented by the color data 52E, the black with RGB values (0:0:0) whose color difference from the black with RGB values (0:0:0) that is the characteristic color is smallest. For that reason, the upper body 78B of the pedestrian image 78, which is an image representing the user U1 shown in FIG. 7, is colored with the black with RGB values (0:0:0) that is the characteristic color. It will be noted that in the present embodiment, when the specific object image is an image representing a person, the one part that is colored with the predetermined color is set beforehand to the part corresponding to the upper body.

FIG. 9 is an explanatory diagram showing the outward appearance of a user U2 serving as the other object.

As an example, the user U2 is a 30-year-old adult. Additionally, the user U2 has been classified into the class of adults and deemed to be another object that is present in the vicinity of the vehicle 10 in the above identification process.

Here, the user U2 has a head 95A, an upper body 95B, and a lower body 95C. The head 95A is the part corresponding to the head of the user U2. The upper body 95B is the part of the user U2 from the neck to the hip joints. The lower body 95C is the part of the user U2 below the hip joints. The user U2 is wearing a white sleeveless top 96 with the design of a moon symbol 96A representing the moon on the upper body 95B and white half-length pants 97 with a vertical stripe design on the lower body 95C.

The user U2 has the outward appearance shown in FIG. 9, but since the user U2 has been deemed to be another object, the head 80A, the upper body 80B, and the lower body 80C of the pedestrian image 80, which is an image representing the user U2 and shown in FIG. 7, is depicted in a white color scheme that is the predetermined mode.

As described above, in the display control device 50, the CPU 51 causes the first display unit 24 to display, based on the detection information, the vehicle image 10A representing the vehicle 10 as viewed from the virtual viewpoint. Additionally, the CPU 51 causes the first display unit 24 to display the pedestrian image 78, representing the user U1 serving as a specific object that is present in the vicinity of the vehicle 10, in the predetermined color simulating the characteristic color derived from the outward appearance of the user U1. Because of this, in the display control device 50, a characteristic derived from the outward appearance of the user U1 is reflected in the color of the pedestrian image 78. Consequently, in the display control device 50, the driver who is an occupant of the vehicle 10 can easily be made to apprehend the user U1 corresponding to the pedestrian image 78 compared with a case where a characteristic derived from the outward appearance of the user U1 is not reflected in the pedestrian image 78.

Furthermore, in the display control device 50, the CPU 51 causes the first display unit 24 to display one part of the pedestrian image 78 in the predetermined color and display parts other than the one part in the predetermined mode. Because of this, in the display control device 50, the processing burden on the CPU 51 can be reduced compared with a case where the entire pedestrian image 78 is displayed in the predetermined color.

Furthermore, in the display control device 50, the CPU 51 chooses, for the predetermined color from among plural colors prepared beforehand, a color whose color difference from the characteristic color is smallest. Because of this, in the display control device 50, the processing burden on the CPU 51 can be reduced compared with a case where a predetermined color simulating the characteristic color is generated every time the specific object image is displayed.

Furthermore, in the display control device 50, the user U1 serving as the specific object is an object having a predetermined attribute. Because of this, in the display control device 50, the driver of the vehicle 10 can be encouraged to be aware of objects having the predetermined attribute that are present in the vicinity of the vehicle 10.

Furthermore, in the display control device 50, when the CPU 51 causes the first display unit 24 to display, based on the detection information and together with the pedestrian image 78, the pedestrian image 80 representing the user U2 serving as another object, the CPU 51 causes it to display the pedestrian image 80 in the predetermined mode. Because of this, in the display control device 50, the attention level of the driver of the vehicle 10 with respect to the user U1 serving as the specific object can be raised at the same time that the processing burden on the CPU 51 is reduced compared with a case where a characteristic derived from the outward appearance of the user U2 is reflected in the pedestrian image 80.

Furthermore, in the display control device 50, the first display unit 24 is a meter display provided on the vehicle front side of the driver's seat of the vehicle 10. Because of this, in the display control device 50, the driver, who is unable to look at multiple places while driving the vehicle 10, can be efficiently made to apprehend information representing the meters of the vehicle 10, the vehicle image 10A, and the pedestrian image 78.

### (Second Embodiment)

Next, a second embodiment of the vehicle 10 pertaining to the embodiments will be described while omitting or simplifying parts that are redundant with the above embodiment.

The second embodiment differs from the first embodiment in that the CPU 51 causes the first display unit 24 to display the specific object image in a mode according to the attribute that the specific object has. As an example, the mode according to the attribute that the specific object has is a mode with which the class of the specific object can be recalled. Specifically, in a case where the specific object is a person classified into the class of children, the mode according to the attribute that the specific object has is a mode where the display size of the specific object image on the first display unit 24 becomes smaller than images representing persons classified into other classes.

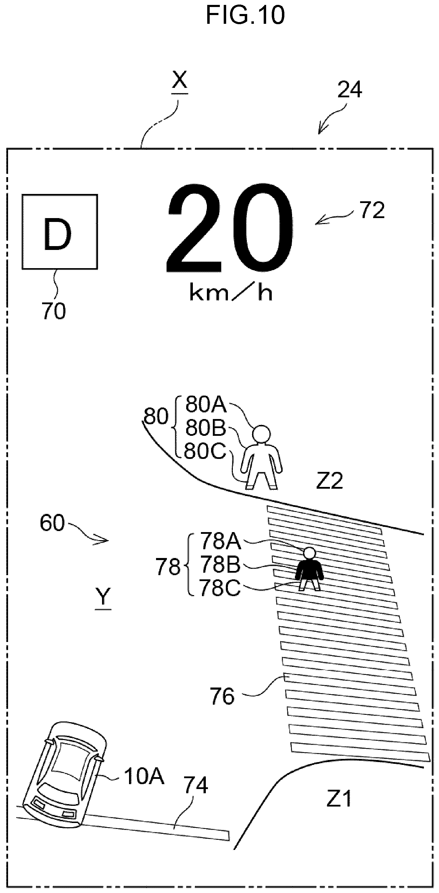

FIG. 10 is a second explanatory diagram showing an example display that is displayed in the display region X of the first display unit 24. As an example, FIG. 10, like FIG. 7, shows what is displayed in the display region X when the vehicle 10 is driving on an ordinary road.

In the display region X shown in FIG. 10, as in FIG. 7, the vehicle image 10A, the ordinary road image 60, the shift position information 70, the vehicle speed information 72, the stop line image 74, the crosswalk image 76, the pedestrian image 78, and the pedestrian image 80 are displayed. It will be noted that the display modes of the above items of information other than the pedestrian image 78 serving as the specific object image are the same as in FIG. 7, so description thereof will be omitted.

The pedestrian image 78 is a specific object image representing the user U1 who is an 8-year-old child crossing the crosswalk represented by the crosswalk image 76. Additionally, the user U1 has been classified into the class of children and deemed to be a specific object that is present in the vicinity of the vehicle 10 in the above identification process.

In the above case, the CPU 51 causes the first display unit 24 to display the pedestrian image 78 in a mode according to the attribute that the user U1 has as the specific object. In FIG. 10, the display size of the pedestrian image 78 in the display region X is smaller than the display size of the pedestrian image 80 representing the user U2 classified into the class of adults. Because of this, in the display control device 50 pertaining to the second embodiment, the awareness of the driver of the vehicle 10 with respect to the user U1 can be raised.

### (Third Embodiment)

Next, a third embodiment of the vehicle 10 pertaining to the embodiments will be described while omitting or simplifying parts that are redundant with the above embodiments.

The third embodiment differs from the above embodiments in that the CPU 51 causes the first display unit 24 to display, in the predetermined color, a specific object image representing an object whose cautionary level is highest among specific objects that are present in the vicinity of the vehicle 10. In the present embodiment, as the above attribute, persons classified into the class of pedestrians are used as the specific objects. Furthermore, as an example, the highest cautionary level is assigned to persons classified into the class of children among pedestrians in general.

Here, taking FIG. 7 to FIG. 9 as an example, in the present embodiment the user U1 and the user U2 are persons classified into the class of pedestrians and correspond to specific objects. In this case, the CPU 51 displays in the predetermined color (e.g., black) the upper body 78B of the pedestrian image 78 representing the user U1 classified into the class of children, which are objects whose cautionary level is highest. At the same time, the CPU 51 displays in the predetermined mode (e.g., white) the head 80A, the upper body 80B, and the lower body 80C of the pedestrian image 80 representing the user U2 who is not an object whose cautionary level is highest. Because of the above configuration, in the display control device 50 pertaining to the third embodiment, the driver of the vehicle 10 can be encouraged to be aware of objects whose cautionary level is highest among specific objects that are present in the vicinity of the vehicle 10.

It will be noted that examples of the object whose cautionary level is highest are not limited to the example described above. For example, when persons classified into the class of pedestrians are set as the specific objects, persons classified into the class of children or seniors among pedestrians in general may be tied for first place as objects whose cautionary level is highest. Furthermore, when, as the class, vehicles classified into vehicles preceding the vehicle 10 are set as the specific objects, vehicles classified into the class of cut-in vehicles may be set as objects whose cautionary level is highest.

Here, an example display of a specific object image when vehicles classified into the class of cut-in vehicles are set as objects whose cautionary level is highest will be described.

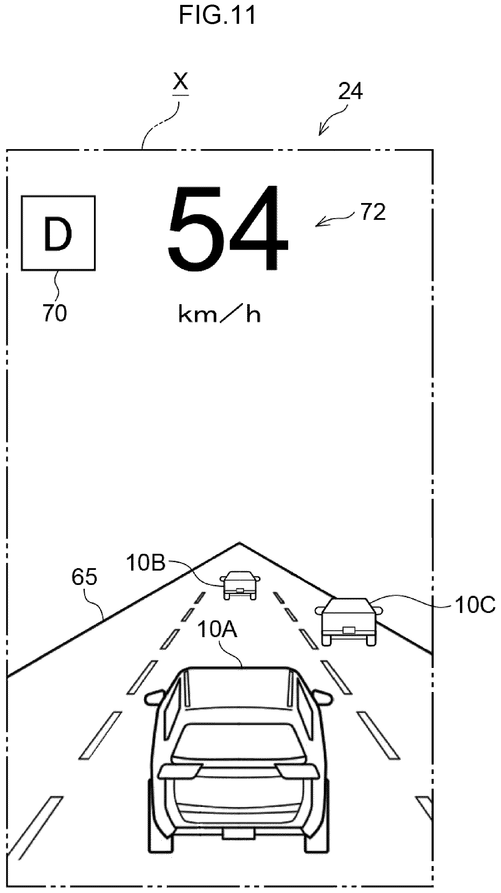

FIG. 11 is a third explanatory diagram showing an example display that is displayed in the display region X of the first display unit 24. As an example, FIG. 11 shows what is displayed in the display region X when the vehicle 10 is driving on an ordinary road different from the one shown in FIG. 7.

In the upper portion of the display region X shown in FIG. 11, the shift position information 70 and the vehicle speed information 72 are displayed. In FIG. 11, "D" is displayed as the shift position information 70, indicating that the shift position is the D range. Furthermore, in FIG. 11, "54 km/h" is displayed as the vehicle speed information, indicating that the vehicle speed is 54 km/h.

Furthermore, in the display region X shown in FIG. 11, an ordinary road image 65 serving as a road image is displayed under the shift position information 70 and the vehicle speed information 72. The ordinary road image 65 is an illustration image representing an ordinary road in the vicinity of the vehicle 10 represented by the map data 52B.

Additionally, in FIG. 11, the vehicle image 10A, another vehicle image 10B, and another vehicle image 10C are displayed on the ordinary road image 65.

As an example, the vehicle 10 is driving in the middle lane of a road with three lanes each way. For that reason, in FIG. 11, the vehicle image 10A is displayed in the middle lane of the road represented by the ordinary road image 65.

The other vehicle image 10B is an illustration image generated based on an illustration design for other vehicles represented by the illustration data 52D. As an example, the other vehicle represented by the other vehicle image 10B is a preceding vehicle driving in the same lane as the vehicle 10. For that reason, in FIG. 11, the other vehicle image 10B is displayed on the upper side of the vehicle image 10A in the drawing in the middle lane of the road represented by the ordinary road image 65.

The other vehicle image 10C is an illustration image generated based on the illustration design for other vehicles represented by the illustration data 52D. As an example, the other vehicle represented by the other vehicle image 10C is a preceding vehicle driving in an adjacent lane that is adjacent to the right side of the vehicle 10. For that reason, in FIG. 11, the other vehicle image 10C is displayed on the upper side of the vehicle image 10A in the drawing in the right-hand lane of the road represented by the ordinary road image 65.

Here, let us assume that, in the state shown in FIG. 11, no vehicle classified into the class of cut-in vehicles, that is, no specific object whose cautionary level is highest, is present among the preceding vehicles. For that reason, the CPU 51 displays the other vehicle image 10B and the other vehicle image 10C in the predetermined mode (e.g., white).

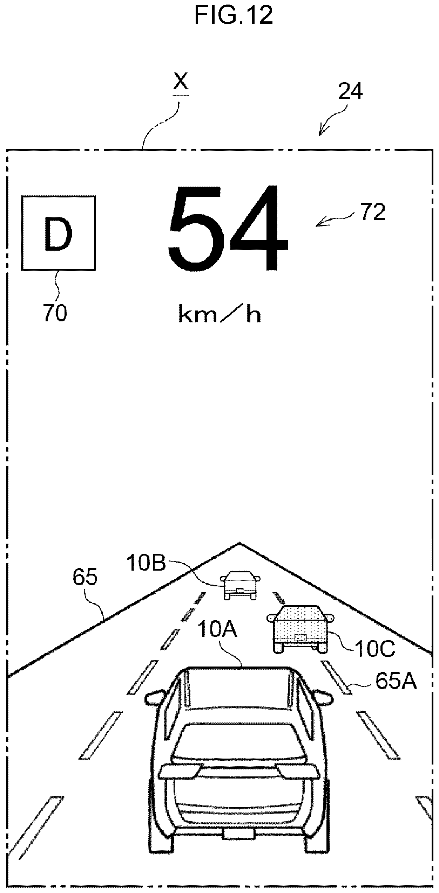

FIG. 12 is a fourth explanatory diagram showing an example display that is displayed in the display region X of the first display unit 24. As an example, FIG. 12 shows what is displayed in the display region X when the CPU 51 detects a cut-in vehicle.

In the display region X shown in FIG. 12, the vehicle image 10A, the other vehicle image 10B, the other vehicle image 10C, the ordinary road image 65, the shift position information 70, and the vehicle speed information 72 are displayed. It will be noted that the positions and the display modes of the above items of information other than the other vehicle image 10C are the same as in FIG. 11, so description thereof will be omitted.

Let us assume that in the state shown in FIG. 12 the CPU 51 detects, based on the detection information, that the other vehicle driving in the adjacent lane that is adjacent to the right side of the vehicle 10's lane is rapidly cutting in front of the vehicle 10. In other words, let us assume that the CPU 51 detects a vehicle classified into the class of cut-in vehicles among the preceding vehicles.

In the above case, the CPU 51 reflects in the display region X the position in real space of the other vehicle that has become a specific object whose cautionary level is highest. As an example, the other vehicle is straddling the white line on the right side of the road with three lanes each way. For that reason, in FIG. 12, the other vehicle image 10C representing the other vehicle is displayed on a line 65A dividing the middle lane of the road represented by the ordinary road image 65 from the adjacent lane that is adjacent to the right side of the middle lane.

Furthermore, in the above case, the CPU 51 displays, in a predetermined color (e.g., amber) simulating a characteristic color derived from the outward appearance of the other vehicle, the other vehicle image 10C that has become a specific object image representing a specific object whose cautionary level is highest. Because of this, the CPU 51 highlights, in contrast to the other vehicle image 10B representing another vehicle that is present in the vehicle 10's lane, the other vehicle image 10C representing the other vehicle that is a specific object whose cautionary level is highest. It will be noted that in FIG. 12 dots are added instead of the predetermined color to the other vehicle image 10C for convenience of description.

### (Other)

Although embodiments of the disclosure have been described in detail above with reference to the attached drawings, the technical scope of the disclosure is not limited to these examples. It will be apparent that a variety of example changes or example modifications within the category of the technical thought set forth in the claims may occur to a person of ordinary skill in the technical field of the disclosure, and it is to be understood that these example changes or example modifications naturally belong to the technical scope of the disclosure.

Furthermore, the advantageous effects described in the above embodiments are illustrative or exemplary and are not limited to what is described in the above embodiments. Namely, the technology pertaining to the disclosure may exhibit, together with or instead of the advantageous effects described in the above embodiments, other advantageous effects that will be apparent to a person of ordinary skill in the technical field of the disclosure from the descriptions in the above embodiments.

The process described in the above embodiments can also be realized by a dedicated hardware circuit. In this case, the process may be executed by one hardware circuit or multiple hardware circuits.

In the above embodiments, the display control program 52A, the map data 52B, the object detection model 52C, the illustration data 52D, and the color data 52E were stored in the ROM 52. However, the disclosure is not limited to this, and these sets of data may be stored in the storage 54 or distributed between and stored in the ROM 52 and the storage 54.

In the above embodiments, the objects corresponding to the specific objects were persons classified into the class of children or seniors, but the objects corresponding to the specific objects are not limited to this. For example, instead of or in addition to persons, animals classified into the class of small animals such as dogs or cats, or vehicles classified into the class of two-wheeled vehicles, may also be the objects corresponding to the specific objects. In other words, the specific objects that are objects having a predetermined attribute are not limited to those described in the above embodiments. The attribute may include the class of children or seniors out of persons, the class of small animals such as dogs and cats out of animals, and the class of two-wheeled vehicles out of vehicles.

In the above embodiments, a case where the predetermined color was a black with RGB values (0:0:0) identical to the characteristic color was exemplified, but the predetermined color and the characteristic color need not be identical colors. For example, the three attributes of color may differ between the predetermined color and the characteristic color as long as the predetermined color is a color whose color difference from the characteristic color is smallest among the plural colors represented by the color data 52E.

In the above embodiments, the one part that is colored with the predetermined color when the specific object image is an image representing a person was the part corresponding to the upper body, but the one part is not limited to this. For example, the one part that is colored with the predetermined color when the specific object image is an image representing a person may also be the part corresponding to the head or the part corresponding to the lower body.

In the above embodiments, making the display size of the specific object image on the first display unit 24 smaller than that of images representing persons classified into other classes was exemplified as the mode according to the attribute that the specific object has, but the disclosure is not limited to this. For example, when the specific object is a person classified into the class of seniors, the image representing the senior that is displayed as the specific object image may be made to possess a predetermined item (e.g., a cane) as the mode according to the attribute that the specific object has.

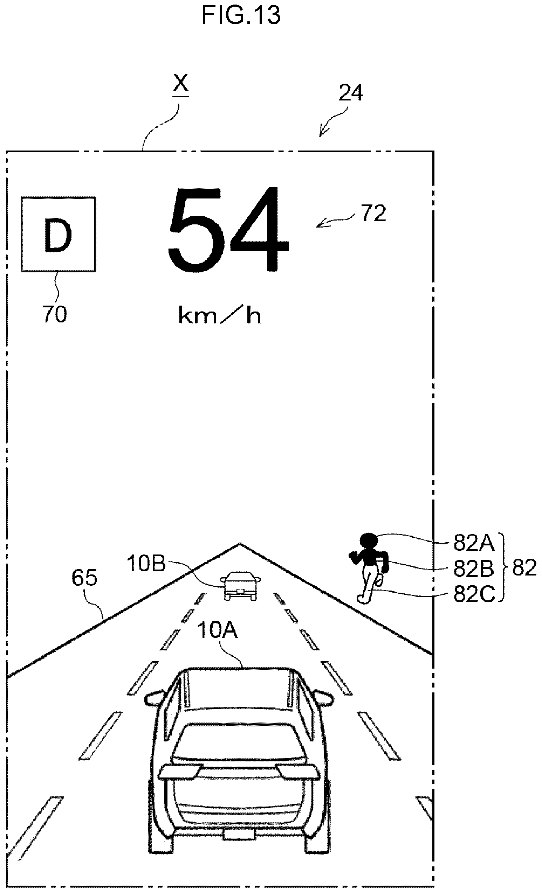

In the above embodiments, the viewpoint coordinates and the viewpoint angle configuring the virtual viewpoint when displaying the vehicle image 10A and other images in the display region X are not particularly limited. Below, using FIG. 13, a case where a person classified into the class of children or seniors as the predetermined attribute is set as the specific object will be described as an example.

FIG. 13 is a fifth explanatory diagram showing an example display that is displayed in the display region X of the first display unit 24. As an example, FIG. 13 shows what is displayed in the display region X when the vehicle 10 is driving on the same ordinary road as in FIG. 11.

In the display region X shown in FIG. 13, the vehicle image 10A, the other vehicle image 10B, the ordinary road image 65, the shift position information 70, the vehicle speed information 72, and a pedestrian image 82 are displayed. It will be noted that the above items of information other than the pedestrian image 82 are the same as in FIG. 11, so description thereof will be omitted.

Here, the virtual viewpoint overlooking the vehicle image 10A and other images in FIG. 13 is different from the virtual viewpoint overlooking the vehicle image 10A and other images in FIG. 7. As an example, the virtual viewpoint in FIG. 13 is a viewpoint overlooking the vehicle image 10A diagonally downward from a position rearward of the direction of travel and is a viewpoint in which the vehicle image 10A is seen from a lower position than the virtual viewpoint in FIG. 7.

Furthermore, the pedestrian image 82 is a specific object image representing an 8-year-old child who is approaching the ordinary road represented by the ordinary road image 65. In this way, since the child is approaching the ordinary road, in FIG. 13 the pedestrian image 82 is displayed from the perspective of the virtual viewpoint on an outside part of the ordinary road image 65.

Additionally, the pedestrian image 82 is an illustration image in which one part of the illustration design for a person represented by the illustration data 52D is colored with the predetermined color (e.g., black). Here, the pedestrian image 82 can be divided into a head 82A, an upper body 82B, and a lower body 82C. The head 82A is the part corresponding to the head of the person represented by the pedestrian image 82. The upper body 82B is the part of the person from the neck to the hip joints. The lower body 82C is the part of the person below the hip joints. In FIG. 13, the head 82A and the upper body 82B of the pedestrian image 82 are colored with the predetermined color (e.g., black), while the lower body 82C of the pedestrian image 82 is displayed in the predetermined mode (e.g., white).

In the above embodiments, the first display unit 24 that is a meter display was used as an example of the "display unit" of the disclosure, but the example of the "display unit" is not limited to a meter display. For example, the example of the "display unit" may be another display such as a center display and a head-up display (HUD). Furthermore, the example of the "display unit" may be a combination of multiple displays such as a meter display and a center display.

In the above embodiments, the display control device 50 executed the identification process shown in FIG. 6. However, the identification process is not limited to this and may be executed by the display control device 50 and another ECU in cooperation with each other. For example, let us assume that the results of the identification process are displayed on the first display unit 24 and the second display unit 25. In this case, the display control unit 50 may control the first display unit 24 of the display device 21, and the other ECU may control the second display unit 25 of the display device 21. In this case, the identification process may be executed by a plurality of ECUs including the display control device 50 and the other ECU in cooperation with each other or may be executed by either ECU among the display control device 50 and the other ECU.

It will be noted that the various processes that the CPU 21 executed by reading software (a program) in the above embodiments may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the various processes may be executed by one of these various types of processors or may be executed by a combination of two or more processors of the same type or different types (e.g., plural FPGAs, and a combination of a CPU and an FPGA, etc.). Furthermore, the hardware structures of these various types of processors are more specifically electrical circuits in which circuit elements such as semiconductor elements are combined.

Furthermore, in the above embodiments, an aspect where the display control program 52A is stored (installed) beforehand in the ROM 52 was described, but the display control program 52A is not limited to this. The display control program 52A may also be provided in a form in which it is recorded in a recording medium such as a compact disc read-only memory (CD-ROM), a digital versatile disc read-only memory (DVD-ROM), and a universal serial bus (USB) memory. Furthermore, the display control program 52A may also take a form in which it is downloaded via a network from an external device. It will be noted that the technology of the disclosure is applicable also to programs and program products.

## Claims

1. A display control device (50) including a control unit (51B) that causes a display unit (24) to display, based on detection information detectable by a vehicle (10), a vehicle image (10A) representing the vehicle (10) as viewed from a virtual viewpoint and causing the display unit (24) to display a specific object image, representing a specific object that is present in a vicinity of the vehicle (10), in a predetermined color simulating a characteristic color derived from an outward appearance of the specific object.

2. The display control device (50) of claim 1, wherein the control unit (51B) causes the display unit (24) to display one part of the specific object image in the predetermined color and display parts other than the one part in a predetermined mode.

3. The display control device (50) of claim 1, wherein the control unit (51B) chooses, for the predetermined color from among plural colors prepared beforehand, a color whose color difference from the characteristic color is smallest.

4. The display control device (50) of claim 1, wherein the specific object is an object having a predetermined attribute.

5. The display control device (50) of claim 4, wherein the control unit (51B) causes the display unit (24) to display the specific object image in a mode according to the attribute that the specific object has.

6. The display control device (50) of claim 1, wherein, when the control unit (51B) causes the display unit (24) to display, based on the detection information and together with the specific object image, another object image representing another object different from the specific object, the control unit (51B) causes the display unit (24) to display the other object image in a predetermined mode.

7. The display control device (50) of claim 1, wherein the display unit (24) is a meter display provided on a vehicle front side of a driver's seat of the vehicle (10).

8. The display control device (50) of claim 1, wherein the control unit (51B) causes the display unit (24) to display, in the predetermined color, a specific object image representing an object whose cautionary level is highest among specific objects.

9. A display control method whereby a computer executes a process to cause a display unit (24) to display, based on detection information detectable by a vehicle (10), a vehicle image (10A) representing the vehicle (10) as viewed from a virtual viewpoint and cause the display unit (24) to display a specific object image, representing a specific object that is present in a vicinity of the vehicle (10), in a predetermined color simulating a characteristic color derived from an outward appearance of the specific object.

10. A non-transitory recording medium in which is recorded a display control program (52A) that is executable by a computer to perform a process to cause a display unit (24) to display, based on detection information detectable by a vehicle (10), a vehicle image (10A) representing the vehicle (10) as viewed from a virtual viewpoint and cause the display unit (24) to display a specific object image, representing a specific object that is present in a vicinity of the vehicle (10), in a predetermined color simulating a characteristic color derived from an outward appearance of the specific object.
